# EUROPEAN PATENT APPLICATION

(11) **EP 3 261 315 A1**
(43) Date of publication of application: **27.12.2017**
(21) Application number: 16382291.9
(22) Date of filing: 23.06.2016
(51) Int. Cl.: H04L 29/06, H04M 3/22, H04M 3/42, H04Q 11/04, H04W 76/02, H04W 88/06

(54) **ACCELARATING FALL-BACK CALL ESTABLISMENT WITH PUSH NOTIFICATIONS**

(71) Applicant: Telefonica Digital España, S.L.U., 28013 Madrid (ES)
(72) Inventor: LANTZ, Johan, 28013 MADRID (ES); URIEN, Jose, Luis, 28013 MADRID (ES)
(74) Representative: Herrero & Asociados, S.L.

(57) **Abstract**

Present invention refers to a method and a system for intelligent routing of an incoming call over a dual telecommunication network supporting both CS and PS connections, comprising: initiating, from a call router server, a CS call establishment connection; at roughly the same time, sending, a push message over the PS connection to a callee's mobile device; as result of receiving the push message, registering said callee's mobile device into the call router server; providing the call router server with a measure of quality of a PS connection; and in the event of receiving, at the call router server, an unreachable notification from the CS connection and the measure of quality is higher than a pre-established minimum value, routing the incoming call through the PS connection.

## Description

### TECHNICAL FIELD OF THE INVENTION

Present invention generally relates to management of incoming calls and more specifically to intelligent routing of incoming calls over a dual telecommunication network.

### BACKGROUND OF THE INVENTION

Nowadays, existing dual telecommunication networks support terminating a call both as a native cellular call over CS (circuit switched connection) and as a VoIP call over a PS (Packet Switched connection), but to become these dual systems really successful, they need to be a natural extension of the traditional cellular phone service, not impacting the traditional user experience but on the other hand relying on the alternative VoIP connection to improve the experience in some scenarios, especially whenever the traditional cellular service cannot provide a satisfactory quality.

Prior art offers mobile communication applications, such as Skype®, Viber®, Line®, Tu Go®, providing an ability for receiving incoming communication calls via a mobile application (app), using a Voice/Video Over IP (VoIP) interface. In addition, devices such as mobile phones are able to receive incoming native cellular calls through mobile networks such as GSM. Some communication systems such as TU Go allow a combination of VoIP and native cellular calls, so that depending on certain logic, the calls are routed to the callee either as a VoIP call managed by the mobile communication app or as a native cellular call. Also a combination of both can happen for a single call, by means of alerting the call using one of the alternatives (VoIP or native cellular call).

In a dual network system the cellular leg is usually prioritized over VoIP both by the Operating System (OS) in the device but also from the operator side. The incoming calls are usually tried as a native cellular call on CS as the first option and VoIP is only considered as a fallback solution if the establishment over CS is not successful. The problem with this approach is that detecting that the CS leg is not working takes time and since it is only given VoIP a chance once this failure is detected, it has a very brief window of opportunity for processing the incoming call and notifying the user. Thus one area where dual systems can make a huge difference is to help avoiding establishing a native call over cellular when we can predict the quality will be poor.

Another characteristic of existing dual networks supporting both traditional native cellular calls as well as VoIP calls is that the system cannot allow the two legs to reach the terminating device at the same time in an uncontrolled way. This can potentially cause both legs ringing at the same time and the VoIP leg will be forcefully destroyed by the device OS (producing an effect called "splash ringing" in the app) which is degradation in the user experience and a direct contradiction of what we are trying to accomplish with dual VoIP - cellular solutions (such as TuGo). Indeed, the most common way to connect a voice call lies on waiting for the cellular connection, so the preference from the mobile operator will in most cases be to try and reach the target device with a native cellular call first and only if that fails, fallback to a VoIP over a PS connection. The problem with aforementioned approach is that the cellular network may take from 6 sec up to 30 sec to inform the call routing function that the device is not reachable over the cellular network (e.g. GSM network), so the caller may abandon the call attempt even before fallback to VoIP happens.

One huge drawback with this is that a lot of time is wasted waiting for the feedback from the operator about the status of the CS leg before trying to reach the device over PS and even when we start trying, reaching the device can easily take 2-3 additional seconds and then the device needs to register to the PS infrastructure, receive the notification for the incoming call as well as start ringing. Then the callee has to hear the ringing and physically answer the call. Considering all these steps, and the fact that the risk of abandon a call attempt by caller increases with call setup delay, these delays combined significantly reduce the chance for the call being successfully pickup up in dual VoIP - cellular solutions.

In an even worse scenario, the operator handling the native cellular CS call leg is not able to produce a failure notification at all and the alternative to route the call as a VoIP call over a packet switched connection is not even considered.

Another problem with existing prior art solutions is that the mobile operator is in many cases not able to really confirm if callee's device is really ringing or not. When this is the case, the operator will only provide what is known as a "fake ringing" that is propagated by the call routing function back to the caller. Therefore receiving a "Ringing" notification from the cellular network is not a guarantee that mobile device of the callee is effectively ringing. The problem with fake ringing is that there will of course be cases where it is actually not ringing at all on the callee's end but since the (faked) ringing notification has already been received by the call routing control function it is assumed that the callee is indeed reachable over CS and the PS option is not even tested. For all the cases where the calleee was not really reachable and the fake ringing provided a false positive, the call will be lost. For the caller it will seem as the callee simply did not pick up her call and for the whole system it means that the PS option never even got a chance.

Another challenge that impacts the time required to establish a VoIP call is the signaling of the incoming call from the call control function to the VoIP client at callee's device. In this context it is important to note that traditional models relying on for instance a single SIP INVITE or XMPP message cannot be used any longer to alert VoIP application installed in modern smartphones. In order to save resources (e.g. battery) latest versions of the most common operating systems (iOS starting in version 10, Windows Phone starting in version 8.0 and Android starting in version 6.0) do not allow the applications to maintain the signaling connection permanently alive by itself anymore.

It is also important to remember that a system able to connect calls both over CS and PS has to solve several challenges that a pure OTT (Over-the-top) client like Skype, Messenger and Whatsapp does not have to consider. Trying to reach the device over the PS and CS legs simultaneously is problematic since all mobile operating systems will always prioritize the native cellular (CS) call over the VoIP (PS) call. If both legs are created at the same time the incoming call will most likely ring first in the PS leg and then it will be interrupted by the incoming CS leg, this is an unacceptable situation since a user might actually get to answer the PS call only to have it interrupted by the CS call (that always gets higher priority by the OS). Due to this a dual network system always wait for the CS leg to confirm whether it is usable or not before trying the PS option, however as already stated, when the PS option finally gets it's opportunity it is often too late.

For all the reasons mentioned before, any technical contribution that reduces waiting times would help to reduce the risk of abandon a call attempt by caller and increase the chance for the call being successfully pickup up.

### SUMMARY OF THE INVENTION

Present invention solves the aforementioned problems by leveraging some information that can be obtained from the mobile device (using a mobile app, usually comprising also the VoIP client) about the quality of the PS connection and/or even about the cellular network coverage, in order to save time and make a well judged routing decision much earlier than traditional methods. Therefore, it is proposed a method for intelligent routing of an incoming call over a telecommunication network, where the telecommunication network supports terminating the incoming call both over a circuit switched connection (CS) and over a packet switched connection (PS), which comprises the steps of:
a) initiating, from a call router server, a call establishment connection over the CS connection;
b) sending, from the call router server, a push message over the PS connection to a calle's mobile device;
c) as result of receiving the push message into calle's mobile device, registering said calle's mobile device into the call router server;
d) providing the call router server with a measure of quality of a PS connection between calle's mobile device and the call router server. (Thus, advantageously, the time wasted when testing the CS leg is eliminated by in parallel silently evaluating the PS leg).
e) In the event of receiving, at the call router server, an unreachable notification from the CS connection initiated at step a) and the measure of quality of step d) is higher than a pre-established minimum value, routing the incoming call through the PS connection.

According to one embodiment of the invention, the steps of initiating, from a call router server, a call establishment connection over the CS connection and sending, from the call router server, a push message over the PS connection to a callee's mobile device, are carried out at roughly the same time.

Additionally, present invention may comprise the steps of: providing the call router server with a measure of quality of the CS connection; comparing the measure of quality of the PS connection with the measure of quality of the CS connection; and routing the incoming call according to the comparison of both qualities. Thus, advantageously, present invention allows not waiting for feedback from the cellular network about the target user not being available, but providing the call routing function with accurate and up to date information about the cellular network coverage and the quality of the PS connection, so that it can take well informed routing decisions in advance and during the call establishment.

According to one particular embodiment of present invention, in the event of the measure of quality of the PS connection is better than the measure of quality of the CS connection, it may be comprised cancelling the call establishment connection over the CS connection and routing the incoming call over the PS connection.

Optionally, in the event of the measure of quality of the CS connection is better than the measure of quality of the PS connection, present invention may comprise:
- setting a threshold for maximum waiting time for receiving a notification about the call establishment connection initiated before and in the event the threshold is exceeded:
- cancelling the call establishment connection over the CS connection and
- routing the incoming call over the PS connection.
Thus, advantageously the mobile operator is provided with the tools to decide the acceptable delay caused in CS before the PS option is promoted and CS leg terminated.

One embodiment of present invention also comprises the step of checking if a ringing notification has been received at the call router server before routing the incoming call through the PS connection. Thus, advantageously splash ringings are avoided.

Additionally, present invention contemplates to disregard for the sake of the routing algorithm and for the sake of the maximum waiting time threshold a ringing notification received at the call router server from the CS connection unless a second notification is received from the callee's device through the PS connection informing that the CS call is actually being alerted at callee's mobile device. This significantly reduces or even eliminates the "fake ringing" problem by using the information provided by the mobile device instead of relying on the information provided by the terminating operator (which is often incorrect).

One embodiment of present invention further considers checking if UDP traffic is blocked, thus the measure of the quality of a PS connection is shortcut in the case of there is no connectivity/availability.

The quality of the CS connection may be based for example on a received signal strength received by callee's mobile device, which is obtained from an Arbitrary Strength Unit (ASU) selected parameter.

The quality of a PS connection may be obtained for example by sending pilot packets to a publicly available server; as response, the publicly available server sending back the pilot packets; and finally assessing the quality of the PS connection based on selected parameters from the response. For example, selected parameters may comprise instance packet loss, jitter and/or delay.

According to one embodiment of the invention, different levels of quality are set, wherein each of the levels is assigned to certain ranges of the selected parameters. Thus advantageously, quality of different connections based on different parameters can be compared.

A second aspect of present invention refers to a system for intelligent routing of an incoming call over a telecommunication network, where the telecommunication network supports terminating the incoming call both over a circuit switched connection (CS) and over a packet switched connection (PS), the system comprising a call router server configured for: initiating a call establishment connection over the CS connection; at the same time, sending, a push message over the PS connection to a callee's mobile device; as result of receiving the push message into callee's mobile device, registering said callee's mobile device; receiving a measure of quality of a PS connection between callee's mobile device and the call router server; and in the event of receiving an unreachable notification from the CS connection and the received measure of quality of the PS connection is higher than a pre-established minimum value, routing the incoming call through the PS connection.

Additionally, according to one particular embodiment of present invention, the call router server is further configured for receiving a measure of quality of the CS connection; comparing the measure of quality of the PS connection with the measure of quality of the CS connection; and routing the incoming call according to the comparison of both qualities.

A last aspect of present invention refers to a computer program product comprising computer program code adapted to perform the method according to any of the claims 1-12 when said program code is executed on a computer, a digital signal processor, a field-programmable gate array, an application-specific integrated circuit, a micro-processor, a micro-controller, or any other form of programmable hardware.

Therefore, present invention proposes a method where, in only around 2-3 seconds, the warm-up feature allows the mobile device to collect relevant information that is passed back to the call routing function long before the status of the CS leg is known. Since no PS leg is initiated there is no risk for collisions between the two networks. This means that very early in the call connection process, the routing function will have a positive (or negative) confirmation on the status of the PS leg.
Moreover, present invention proposes to take intelligent decisions as to where to route the calls (VoIP vs. native cellular) avoiding for instance attempts to establish a cellular call that will certainly not be successful.

Present invention will further increase the call connect success rate especially for PS calls but also in general since it will rescue calls that would otherwise time-out due to long delays evaluating the CS leg and, as long as the mobile device can be contacted, it can help the call routing function to filter fake ringing scenarios and to ensure that calls that would otherwise be lost waiting for CS are instead connected over PS.

### DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a drawing wherein, by way of illustration and not restrictively, the following has been represented:
**Figure 1****.-** shows a normal scenario of prior art
**Figure 2****.-** shows the "warm-up" push notification, which prepares the PS leg in parallel to the CS call establishment.
**Figure 3****.-** shows a scenario where a timeout is set to receive an unreachable/ringing notification from the cellular network.
**Figure 4****.-** shows the problem of fake ringing and how present invention solves it.
**Figure 5****.-** shows a flow diagram according to one particular embodiment of present invention.

### DETAILED DESCRIPTION OF THE INVENTION

The matters defined in this detailed description are provided to assist in a comprehensive understanding of the invention. Accordingly, those of ordinary skill in the art will recognize that variation changes and modifications of the embodiments described herein can be made without departing from the scope and spirit of the invention. Also, description of well-known functions and elements are omitted for clarity and conciseness.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

Present invention discloses a method which enhances warming-up the PS connection while evaluating the CS leg in a dual telecommunication network. Main objective of present invention is to increase the chance of a first user waits for a second user to answer a call, so it is essential to reduce waiting times as much as possible. Thus, present invention proposes to not use the signaling connection but instead use the push notification mechanisms provided by each operating system. However, the point of present invention is to not use the push message as the actual indication to start a call alert but as a warm-up request from the call control function. This warm-up request is sent at the same time as the CS leg evaluation starts, buying the PS client a huge head start and saving a useful time which may be crucial to get the call answered.

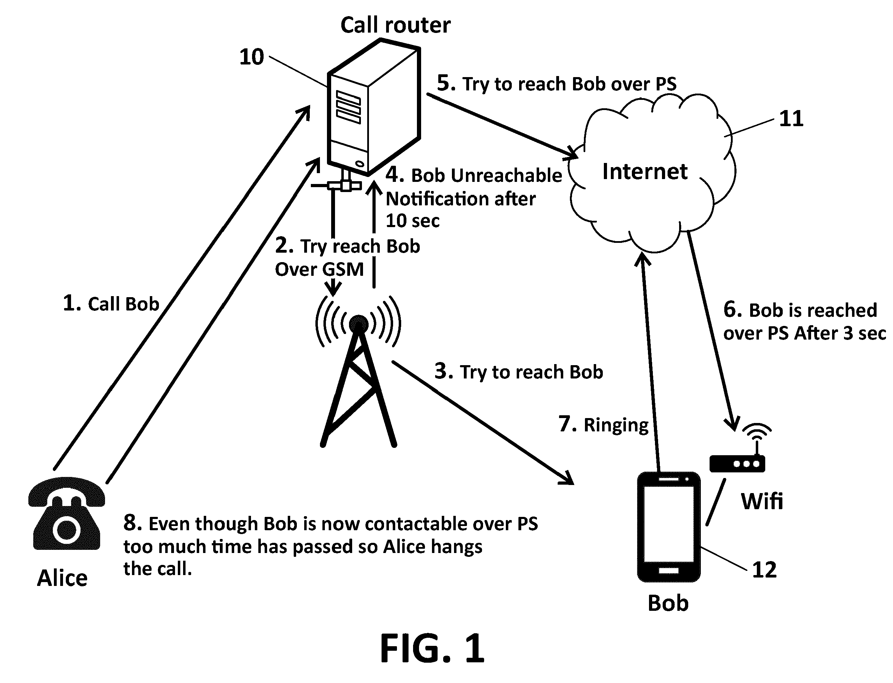

**Figure 1** (prior art) shows how the long delay receiving feedback from the CS leg might lead to a first user (Alice) hanging the call even though the PS leg would have been able to handle the call much earlier. In this example, Alice is calling (1) Bob through a dual telecommunication network. A call router server (10) tries to reach Bob over the cellular network (2), which may be 2G, 3G or 4G. Then, the cellular network tries to reach Bob (3) and the call router server waits until an answer is received. After a certain time, 10 seconds in this case, an unreachable notification (4) is received at the call router server, which now tries to reach Bob over a PS connection (5) through the Internet (11). Then, Bob is reached (6) over the PS connection, which in this example takes a time in the range of 3 seconds, and a ringing notification is sent back (7) from Bob's mobile device (12), but even though Bob is now contactable over the PS connection, too much time has passed, (there is a total delay of 10+3 seconds before we know the PS leg is handling the call (10 sec to receive the "unreachable" in CS and another 3 seconds to reach the second user (Bob) and receive the Ringing notification over PS) so Alice hangs the call (8).

The method proposed by present invention has already improved in this phase the waiting time at least in 2-3 seconds, since this is the time it normally takes to deliver a push notification to a mobile device. In existing solutions this action is only triggered after the CS leg failure while with the new approach it is done in parallel. Again, do note that no call setup information is passed to the device in this step, or it is passed but with a request not to alert the call until a further request is received.

Note that for this warm-up phase it is still irrelevant what protocols or technologies are used for the actual call since no call setup activities are started yet. What will happen is that the mobile device reports back the reception of the push message directly to the call routing function and initiates its procedures to register to the server.

In addition, according to one embodiment of present invention, the call router server (10) may be provided with accurate information about the potential quality of CS and PS legs. In contrast with existing solutions favoring CS calls, where the PS option is only used as a last resort and it does not really matter what quality of service (QoS) it may or may not provide in PS because the CS leg has been already discarded (so better try PS than doing nothing at all), present invention information about the potential quality of the PS and/or CS connections may be gathered and used to take well informed routing decisions.

### Determining the quality of the PS connection

At this stage it is assumed that the warm-up push notification has reached the mobile device (12) and that the call routing function installed on the call router server (10) has been informed about the delivery success. Assuming that a VoIP client is installed in the mobile device (12), registration is initiated towards the PS call service or at least a confirmation that an existing connection is working (for instance by sending and receiving ping-pong packets with the server). Then the VoIP client will start to verify the quality of the PS connection.
Measuring the quality of the PS connection can be done in many ways according to different particular embodiments of present invention, such as sending pilot packets (e.g. fake RTP packets) or pings towards a publicly available server that will loop back the packets to the client that would evaluate the responses. This allows the client and/or the server collecting accurate and up to date information about the quality of the PS connection (for instance based on parameters of packet loss, jitter or delay, but any other parameter can be selected and taken into account). For example, UDP traffic can be considered and if it is detected that UDP traffic is blocked causing no media connectivity, the PS leg is rejected instantly.

Once a measure of quality and availability of the PS connection is obtained, a more educated decision can be taken on whether the call can be connected over PS or not. Additionally, this information can be used in combination with the results obtained for the CS leg to determine the best way to connect the call.

### Determining the quality of the cellular connection

Present invention, according to a particular of the invention, may gather valuable information about the quality of the cellular connection. The mobile device, for example through an installed mobile application comprising the VoIP client, may request information about cellular network signal strength from the underlying operating system (OS). If these measurements indicate poor or non-existing cellular network coverage, present invention may assume that the cellular network will not be able to reach the mobile device, or if native cellular call reaches the device, low cellular network coverage is likely to produce a deficient communication.

The cellular network connection quality can be measured by means of the Arbitrary Strength Unit (ASU), an integer value proportional to the received signal strength measured by the mobile device. From the ASU it is possible to calculate the real signal strength measured in dBm (and thereby power in Watts) as follows:
In GSM networks, ASU maps to RSSI (received signal strength indicator, see TS 27.007[1] sub clause 8.5). The valid range of ASU is from 0 to 31 and 99 (for not known or not detectable). The real signal strength measured in dBm is Signal_Strenght (dBm) = 2 × ASU - 113.
In UMTS networks, ASU maps to RSCP level (received signal code power, see TS 27.007[1] sub clause 8.69 and TS 27.133 sub clause 9.1.1.3). The valid range of ASU is -5 to 91 and 255 (for not known or not detectable). The real signal strength is Signal_Strenght (dBm) = ASU - 116.
In LTE networks, ASU maps to RSRP (reference signal received power, see TS 36.133, sub-clause 9.1.4). The valid range of ASU is from 0 to 97. For the range 1 to 96, ASU maps to (ASU - 141) ≤ Signal_Strenght (dBm) < (ASU - 140). The value of 0 maps to RSRP below -140 dBm and the value of 97 maps to RSRP above -44 dBm.

Analysis of usage data from dual applications show that close to 8% of all incoming GSM calls are made to devices with an ASU level of 1 or below, which mean a very poor cellular network coverage and even if signaling gets through, the call quality will be poor.

In order to simplify the computation and to make easier the comparison between qualities of CS and PS connections, one embodiment of the invention comprises setting different ranges in selected parameters corresponding to different levels of quality of an eventual call, for instance a three level classification according to 'x' and 'y' thresholds for an ASU parameter of an eventual CS call is reproduced in the following table:

| **ASU thresholds** | **Level of Quality** |
|---|---|
| **ASU >= x** | Good quality |
| | In this case the CS connection is the preferred approach, and usually a fallback to PS shall just be performed whenever there is a negative feedback about the establishment of the CS call (e.g. device unreachable) |
| **y <= ASU < x** | Poor quality |
| | In this case the CS connection is just the preferred approach if there is no better quality alternative (e.g. PS connection also having poor quality or non viable) |
| **ASU < y** | Very poor quality or non-existing signal |
| | In this case the CS connection shall just be given an opportunity if there is no alternative (e.g. non viable PS connection for instance due to blocked UDP traffic) |

The mobile device may also be configured to query the mobile operating system for the current state of the telephony service. Thus, it can be provided an accurate indication as to whether the device is already engaged in a CS call or if there is an incoming CS call ringing at that moment. Then, according to one particular embodiment, once the signaling connection has been confirmed as well as the expected PS leg media quality, the CS leg signal level and the status of any active CS call, the application sends all this information directly to the call routing function. All these checks will easily be complete in less than 500 msec, which means that, even if there is a 2-3 second delay for delivering the warm-up push notification, starting the application and then less than a second to perform these tests, there is still plenty of time before receiving any feedback from the CS leg, so very early in the call connection process, the routing function will have a positive (or negative) confirmation on the status of the PS leg, but since no PS leg is initiated there is no risk for collisions between the two networks.

Given that systems from prior art that depend on the feedback from the CS leg before trying the PS leg are very unpredictable, there is no fixed limit for how long it may take for the CS leg to provide feedback and even the ringing notification might not be based on reality. In sharp contrast, with the proposed approach of present invention the call routing function will have a quality indication from the PS leg very early making it possible for the mobile operator to define certain rules for when to connect the call over PS and terminate the attempts on CS.

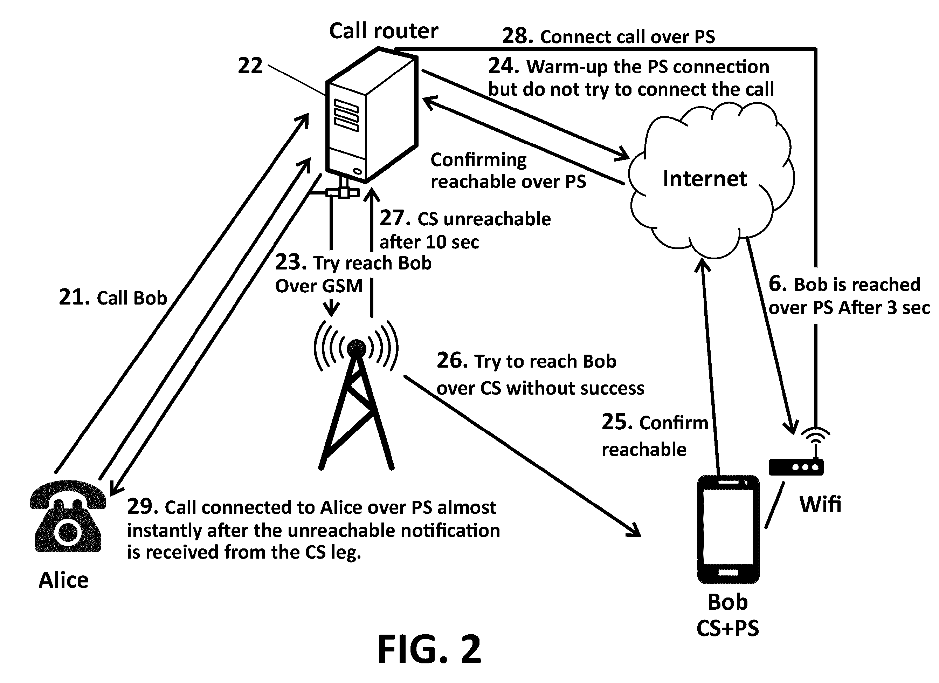

**Figure 2** shows how the warm-up using the push notification allows the system to prepare the PS leg in parallel to trying to connect the call over CS and establishing the call upon receiving an unreachable notification from the cellular network. Similarly to figure 1, a first user (Alice) is calling (21) a second user (Bob) through a dual telecommunication network. A call router server (22) tries to reach Bob over the cellular network (23), which may be 2G, 3G or 4G (without precluding its applicability to any future cellular network technology such as 5G). At the same time, the call router server warms-up the PS connection by sending (24) a push notification through the Internet (20). After a short time, for example 3 seconds, Bob is reached (6) over the PS connection and the mobile device, as a response, sends back a confirmation to the call router server that it is reachable (25). Meanwhile, the cellular network is still trying to reach Bob without success (26) and sends an unreachable notification (27) to the call router server after a certain time, in this example 10 seconds. The call router server has information about both CS connection (unreachable) and PS connection (available), so immediately routes the call over the PS connection (28) and the call is connected over PS almost instantly after the unreachable notification is received from the CS leg (29).

Even in the regular case in which the call control function waits for a positive or negative response from the cellular network, the fact of having established the PS call in parallel has valuable benefits. Indeed in the very moment when the cellular network informs that the device is "unreachable" through the CS connection the call control function can trigger the incoming call alert through the PS connection that has been pre-established.

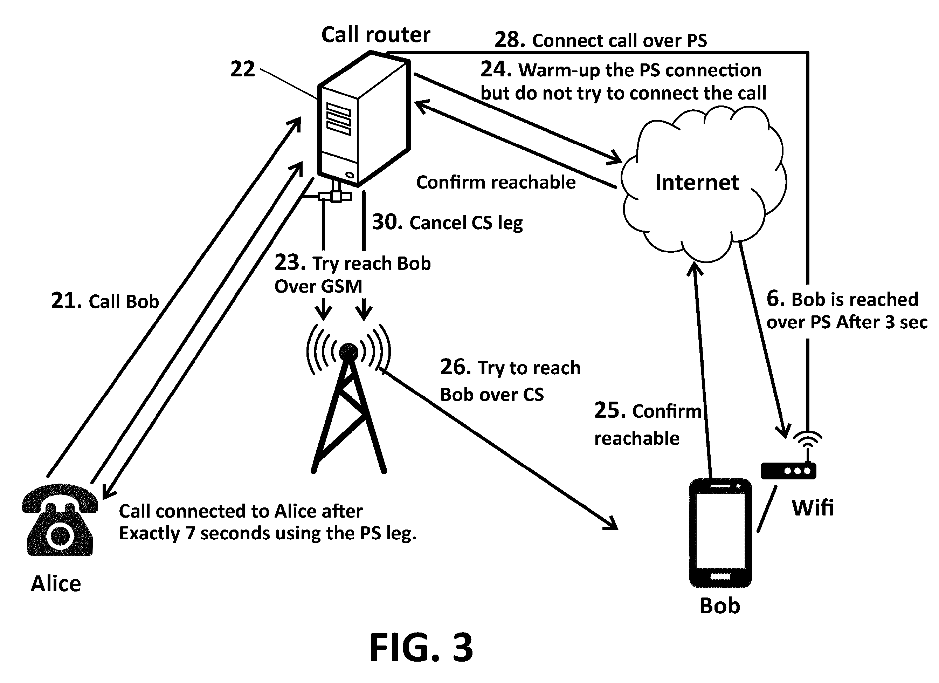

**Figure 3** shows a scenario where a timeout is set to receive an unreachable/ringing notification from the cellular network. According to one embodiment of present invention, it is considered the possibility of defining a limit for when the CS attempt should be terminated in case the PS leg is successfully verified, thus once the PS connection has been already verified as excellent after less than 3 seconds, the network operator is able to define a maximum delay for when to abandon the CS tests and simply activate the PS leg, in order to trigger the PS call alert within a reasonable time since the call was initiated, which increases the chances to get it answered before the caller abandons the call attempt. Thus, over the scheme of figure 2, figure 3 introduces a time limit into the call router server set to 7 seconds (can be varied in other examples) which implies a close to 100% certainty that the call to Bob will be able to connect over his PS connection (WiFi connection for example) after 7 seconds. Therefore, once the call routing function of the call router server knows that the PS leg is capable of receiving the call, when the time limit of 7 seconds expires the CS leg is cancelled (30) and the call connected (28) over the available PS connection, changing the behavior from non-deterministic to deterministic and providing the tools to move from a system relying on feedback from networks for which it has no control over, towards using a method that allows introduction of hard deadlines based on live feedback.

In order to further reduce the risk of collisions between the CS and PS legs (splash ringing) the mobile device can send periodic messages to the call routing function of the call router server confirming that the CS call is not ringing at the device. Thus, the call routing function cancels (30) the CS leg attempts slightly before connecting the call over PS (28) and the risk for collisions between the legs will be insignificant.

In contrast, in the normal scenario the call routing function of the call router server would simply have waited 10 seconds for the CS leg to fail, then tried the PS one adding another 2-3 seconds just to reach the device meaning it would take around 15 seconds just for Bob's phone to ring. Even worse, it could never be guaranteed that it actually took 12 seconds to fail on CS, it could be more or less.

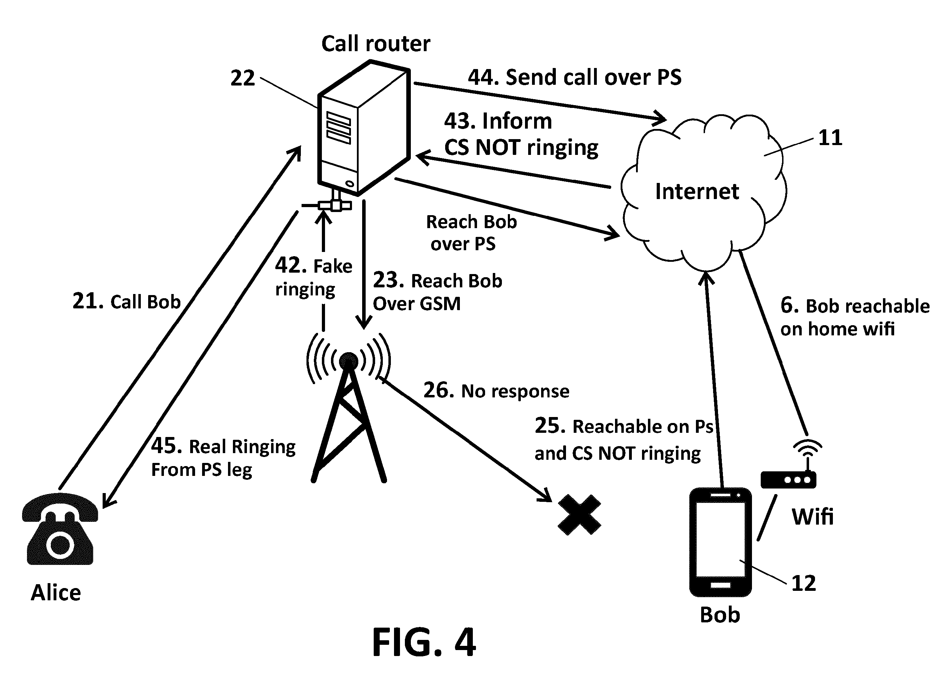

**Figure 4** refers to fake ringing problems produced in CS legs which may lead to miss calls.

Many times, even if the call routing function receives a ringing notification from a cellular network, it is not guaranteed that said notification is truthful. On the contrary it is very common that the ringing is faked by the network. The consequence of this is that the call may be failing but the initiating client and operator thinks all is ok and that callee's mobile device is indeed ringing.

Present invention solves this problem taking the information from the mobile device, which knows with 100% certainty if it is ringing or not. Said information will be fed back to the call routing function directly and, in the event that the remote mobile operator says callee's mobile device is ringing while the mobile device (through the app installed) says it is not, then a fake ringing is identified, something that is not possible with existing implementations of prior art.

Following with the scenario of figure 2, now, after the call router server tries to reach Bob over the CS connection without success (26), an unreachable notification (27) is not sent to the call router server, but the network is mistakenly sending a fake ringing (42) to the call router server. According to this particular embodiment, the call router server waits to receive a confirmation from the callee's mobile device (12) that the mobile device is actually ringing. In this case the mobile device is not ringing, so the mobile device sends to the call router server a notification (43) informing that the mobile device is not ringing. Thus, a fake ringing is determined and the call router server disqualifies said fake ringing produced in the CS leg. Immediately, the call router server routes the call through the available PS connection (44) and a real ringing is now sent to Alice from the PS connection (45).

For routing purposes a ringing identified as a fake ringing shall be ignored, that is, no assumption will be derived from said fake ringing, that is receiving a fake ringing shall be neither interpreted as a call being alerted to the callee, nor as a failed call. Whenever the fake ringing is identified the call will not be considered to be actually ringing until this information is also confirmed by the mobile device, which directly takes this information from its operating system.

As an extension of this concept, the mobile device could continue periodically sending the information about the current CS call status back to the call router server it receives either the call or a notification that this session is no longer valid (for example if it has been cancelled or answered in another device). Thus, it would be provided a close to 100% accurate CS ringing indication by the mobile device, a great advantage compared to the unreliable option provided by the mobile network.

Different routing decisions and rules may be set up according to different embodiments of present invention. Some examples are provided below according to the procedures previously described:
First of all the CS call establishment begins. In parallel the PS call is warmed up, as previously described. Then the PS connection quality is measured. Also the CS connection quality (e.g. ASU) is obtained from callee's mobile device operating system. Both quality levels are reported to the call routing function of the call router server, which firstly checks if the PS connection is viable, that is, if it has a minimum level of quality and would be viable for a call (e.g. UDP traffic not blocked).
As it can be appreciated when the PS connection has a very low quality or is not viable for a communication, e.g. the UDP traffic is blocked, it will not be considered even as a fallback solution. Instead the initiated CS call establishment shall continue.
If the PS call exceeds a minimum quality threshold then two options can happen depending on how good the PS connection is in comparison with the potential CS connection (e.g. cellular network coverage). Note that the quality measures of the PS and CS are not directly comparable as they measured different parameters, so they are homogenized before comparing them. An exemplary way to do it is to divide quality of both the PS and the CS in 3 different buckets (good quality, poor quality, very poor quality / non-viable) according to ranges of the corresponding parameters so that the quality of a PS call and a CS call in the same quality bucket are similar, and for instance any CS call in a "poor quality CS connection" has a better perceived quality than a PS call in a "very poor quality PS connection".
If the PS connection quality is deemed to be better than the CS connection quality and the application has not reported the CS call to be actually ringing in the device, then the CS call establishment shall be aborted and soon afterwards the PS call shall be alerted to the callee. As the PS connection has been previously warmed-up this can be done almost immediately.
If on the other hand the CS connection quality is deemed to be better than the PS connection quality then the CS call establishment shall continue and the PS connection shall be kept as fallback in a process that can be called "delayed PS ringing", which means that, although the first steps of the PS call establishment have been carried out, the PS call is not alerted yet, and instead a VoIP client holds on for some seconds to receive feedback about the establishment of the CS call. In case the cellular network reports the target device to be "unreacheable", then the PS call is immediately alerted to the callee.
Also after a certain number of seconds (e.g. 7 seconds) without any notification of the CS call to be ringing (excluding fake ringings) the CS call establishment shall be aborted and soon afterwards the PS call shall be alerted to the callee. This way the PS call can have a chance to be answered by the callee before the caller gives up and the risk of a "splash ringing" is minimized. Note that the time waited to receive feedback about the CS call, may be configurable and even adaptive depending on different factors, such as the actual quality of the connections or their relative quality.
If, prior to the expiration of the time limit, a notification of the CS call to be actually ringing is received, then the CS call continues and the PS call is not alerted.

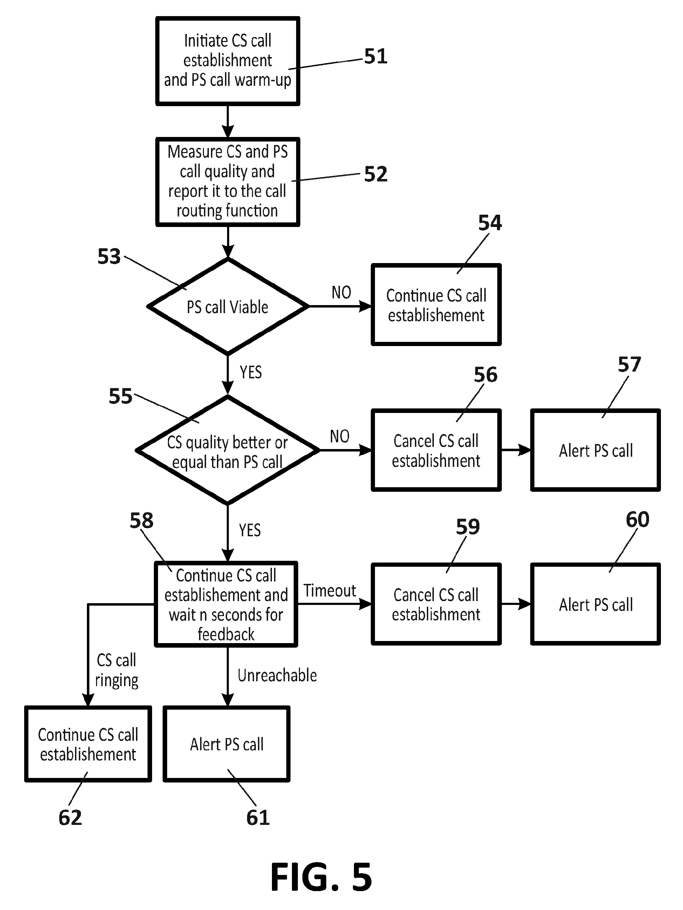

**Figure 5** shows a flow diagram according to one particular embodiment of the invention, where first step is to initiate CS call establishment and PS call warm-up (51). Next step is to measure CS and PS call quality and report to the call routing function of the call router server (52). Then, it is checked if PS call is viable (53) and if it is not, CS call establishment continues (54), but if PS call is viable, CS quality and PS quality are compared (55). If PS quality is better than CS quality, CS call establishment is cancelled (56) and the call is routed through the PS connection (57). Otherwise (if CS quality is better or equal than PS quality), CS call establishment continues and waits a certain time for feedback (58). If the certain time is exceeded, CS call establishment is cancelled (59) and the call is routed through the PS connection (60). If an unreachable notification is received by the call router server before the time limit expires, the method routes the call through the PS connection (61). If a ringing notification is received by the call router server before the time limit expires, CS call establishment continues (62), provided this notification is not proven to be a fake ringing by checking the information received through the PS connection from the callee's mobile device (12) as to whether the CS call is actually being alerted or not.

The following table summarizes potential decision rules according to a particular embodiment of this invention, based on the quality of the PS and CS connections as reported to the call routing function:

| | **PS Good Quality** | **PS Low Quality** | **PS Very Low Quality / Non viable** |
|---|---|---|---|
| **CS Good Quality** | Delayed PS Ringing | Delayed PS Ringing | Continue CS call |
| **CS Low Quality** | Cancel CS call and alert PS call | Delayed PS Ringing | Continue CS call |
| **CS Very Low Quality** | Cancel CS call and alert PS call | Cancel CS call and alert PS call | Continue CS call |

It is relevant to note that a cellular call cannot be controlled after it reaches the mobile device as natives CS calls are usually managed directly by the operating system. The call routing function has no clue about the cellular network conditions the mobile device is currently under. However by feeding this information from the mobile device operating system to the call routing function, the system can take better control of the situation and indeed the call routing function can take decisions such as aborting the native CS call and resuming a PS call that was warmed up, that is pre-established but not alerted.

Present invention allows to instantly or almost instantly alerting the call as a VoIP call using the mobile app installed in the mobile device in a scenario of poor or non-existing cellular network coverage. Thus, it is possible to decide to wait a short time to see if the native cellular call leg arrives if it is detected a quality close to a threshold level for the cellular network signal strength.

Present invention allows the system to successfully establish a relevant percentage of calls by routing them as PS calls, that otherwise would have timed out in the cellular network or in the slightly better scenario they would have connected but quality would have been too poor to maintain the conversation which in turn would impact the customer satisfaction and the Average Call Duration (ACD).

## Claims

1. Method for intelligent routing of an incoming call over a telecommunication network, where the telecommunication network supports terminating the incoming call both over a circuit switched connection (CS) and over a packet switched connection (PS), which comprises the steps of:
a) initiating, from a call router server, a call establishment connection over the CS connection;
b) sending, from the call router server, a push message over the PS connection to a callee's mobile device;
c) as result of receiving the push message into callee's mobile device, registering said callee's mobile device into the call router server;
d) providing the call router server with a measure of quality of a PS connection between callee's mobile device and the call router server;
e) in the event of receiving, at the call router server, an unreachable notification from the CS connection initiated at step a) and the measure of quality of step d) is higher than a pre-established minimum value, routing the incoming call through the PS connection.

2. Method according to claim 1 further comprising:
- providing the call router server with a measure of quality of the CS connection;
- comparing the measure of quality of the PS connection with the measure of quality of the CS connection;
- routing the incoming call according to the comparison of both qualities.

3. Method according to claim 2, wherein in the event of the measure of quality of the PS connection is better than the measure of quality of the CS connection, further comprising cancelling the call establishment connection over the CS connection and routing the incoming call over the PS connection.

4. Method according to claim 2 wherein in the event of the measure of quality of the CS connection is better than the measure of quality of the PS connection, further comprising:
- setting a threshold for maximum waiting time for receiving a notification about the call establishment connection initiated at step a), and in the event the threshold is exceeded:
- cancelling the call establishment connection over the CS connection and
- routing the incoming call over the PS connection.

5. Method according to any one of previous claims further comprising checking if a ringing notification has been received at the call router server before routing the incoming call through the PS connection.

6. Method according to claim 4 wherein a ringing notification received at the call router server from the CS connection is regarded as an invalid notification of the call establishment connection over CS, unless a notification is received through the PS connection informing that the CS call is being alerted at callee's mobile device.

7. Method according to any of previous claims wherein the step of providing the call router server with a measure of quality of a PS connection between callee's mobile device and the call router server, further comprising checking if UDP traffic is blocked.

8. Method according to claim 2 wherein the quality of the CS connection is based on a received signal strength received by callee's mobile device, which is obtained from an Arbitrary Strength Unit (ASU) selected parameter.

9. Method according to any one of previous claims wherein providing the call router server with a measure of quality of a PS connection further comprising
- sending pilot packets to a publicly available server;
- as response, the publicly available server sending back the pilot packets;
- assessing the quality of the PS connection based on selected parameters from the response.

10. Method according to claim 9, wherein selected parameters at least comprises: instance packet loss, jitter and delay.

11. Method according to any one of previous claims, further comprising setting different levels of quality, wherein each of the levels is assigned to certain ranges of the selected parameters.

12. Method according to any one of the previous claims, wherein the steps of initiating, from a call router server, a call establishment connection over the CS connection and sending, from the call router server, a push message over the PS connection to a callee's mobile device are carried out at roughly the same time.

13. System for intelligent routing of an incoming call over a telecommunication network, where the telecommunication network supports terminating the incoming call both over a circuit switched connection (CS) and over a packet switched connection (PS), the system comprising a call router server configured for: initiating a call establishment connection over the CS connection; at the same time, sending, a push message over the PS connection to a callee's mobile device; as result of receiving the push message into callee's mobile device, registering said callee's mobile device; receiving a measure of quality of a PS connection between callee's mobile device and the call router server; and in the event of receiving an unreachable notification from the CS connection and the received measure of quality of the PS connection is higher than a pre-established minimum value, routing the incoming call through the PS connection.

14. System according to claim 13 wherein the call router server is further configured for receiving a measure of quality of the CS connection; comparing the measure of quality of the PS connection with the measure of quality of the CS connection; and routing the incoming call according to the comparison of both qualities.

15. Computer program product comprising computer program code adapted to perform the method according to any of the claims 1-12 when said program code is executed on a computer, a digital signal processor, a field-programmable gate array, an application-specific integrated circuit, a micro-processor, a micro-controller, or any other form of programmable hardware.
